# EUROPEAN PATENT APPLICATION

(11) **EP 1 795 988 A1**
(43) Date of publication of application: **13.06.2007**
(21) Application number: 05077813.3
(22) Date of filing: 10.12.2005
(51) Int. Cl.: G05D 11/00

(54) **Arrangement for ratio-controlled dispensing of plural componet materials**

(71) Applicant: de Schrijver, Aster, 9831 Deurle (BE); Dhaenens, Herman, 8450 Bredene (BE)
(72) Inventor: de Schrijver, Aster, 9831 Deurle (BE); Dhaenens, Herman, 8450 Bredene (BE)
(74) Representative: Colens, Alain M.G.M.

(57) **Abstract**

The invention is directed to a ratio control arrangement for the dispensing of plural component materials. The plural components are supplied independently to separate, coaxially connected, not externally driven, positive dosage pumps. These pumps are designed in such manner that their output ratio at equal rotational speed corresponds to the desired mixing ratio, independently of the feeding pressure of the plural components. For example the delivery mixing ratio is set by the ratio of the width of the pump's rotatable wheels. The arrangement is particularly suitable for dispensing PU foams.

## Description

The present invention concerns an improvement for ratio-controlled dispensing of two or more liquid component materials such as polyurethane foam precursors, adhesives, sealants, paints, elastomeric coatings, thermosetting resins and the like.

Generally traditional multi-component dispensers like a two-component PU-handgun are used without auxiliary ratio-controlling unit. The disadvantage of such a dispenser is the built-in risk of having inaccurate mixing ratios or mixing volumes due to pressure differences in the single pressurized sources or due to viscosity differences of the liquids.

According to the invention, the concept of the new ratio-controlled arrangement involves at least two independent pressurized sources of the liquid components, which are coupled to a manifold assembly containing at least two rotatable "pump" units which are made operatively interdependent.

The pump arrangement is not driven by a motor. It is used only as a ratio-control device operated by the difference in pressure between the input components from the containers and the output end of a delivering device.

The invention will be better undertood with reference to the attached non limitative drawings provided as examples only wherein
Fig. 1 shows the internal components of a Roots pump
Fig. 2 illustrates 2 and 3 coaxilly connected pumps according to the invention
Fig. 3 illustrates the rotatable wheels of coupled pumps
Fig. 4 shows an assembly of a roots pumps, an adaptor and the associated aerosol cans
Fig. 5 is an example of a portable spray kit including the adapter but without the corresponding cans, with a detailed view
Fig. 6 shows an example of tubing connecting the assembly of the invention to separate pressurized cylinders
Fig. 7 illustrates various other type of "pumps" suitable for the invention, as recognized by the man skilled in the art.
Fig. 8 is a view of a multi-component dispenser according to the prior art.

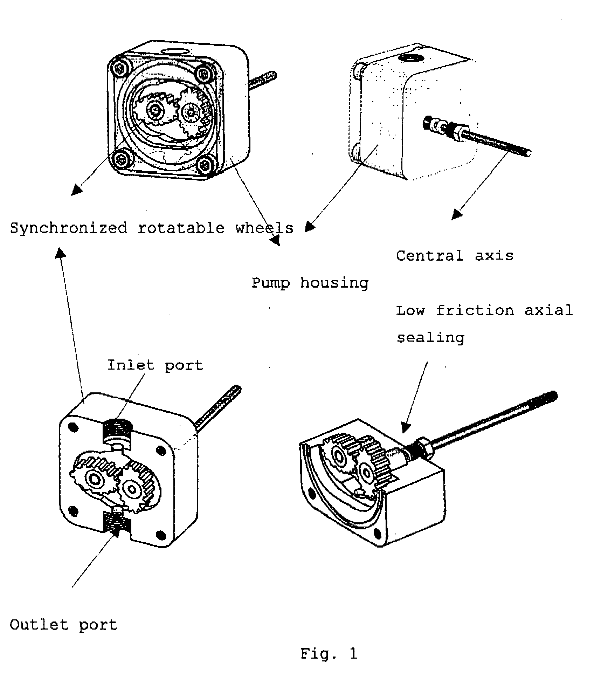

As shown in Fig. 1 an example of suitable ratio control device comprises a couple of roots pump consisting out of a
- pump housing
- set of synchronized rotatable wheels, having gear teeth on their peripheral surfaces.
- one of the wheels comprising a central axis, which extends to the outside of the pump house as to provide a mechanical connection, sealing the axis by means of a low friction axial sealing.
- An inlet and outlet port

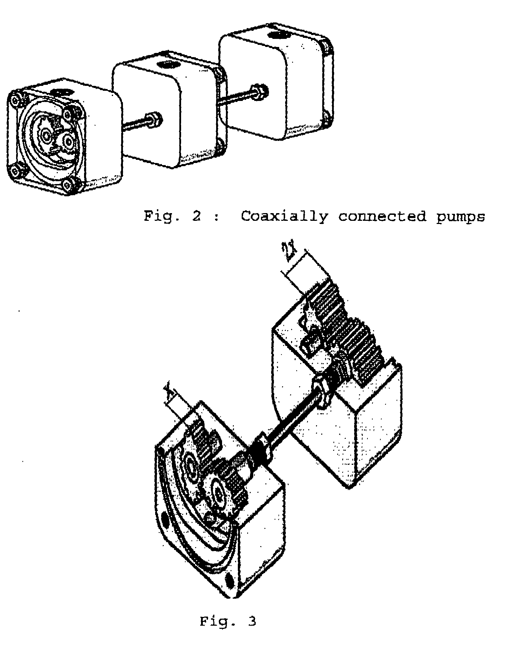

This Roots pump is capable of producing a rotation speed when fluid is forced through an inlet port into the pump housing. This force is provided by the independently pressurized flow sources, for example pressurized cans containing the liquids.
When connecting two or more pumps coaxially the rotation of the pumps can be synchronized by a mechanical link such as a common axis of the shafts (fig. 2).
It is apparent then that the mixing ratio will depend on the volume taken over by each rotation around the above common shaft, that is to say the dimensional features of the chambers and rotatable wheels or blade.

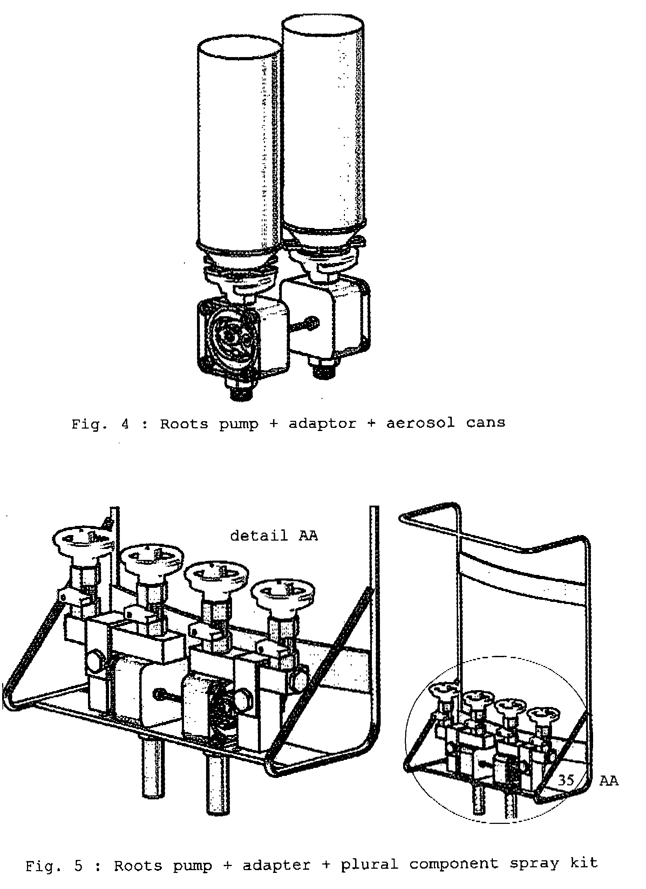

Table 1 is a simple illustration of this principle as applied for the coaxilly connected pump in Fig. 3. mixing ratio coaxially connected pumps = ½ x = width rotatable wheels

**Table 1**

| mixing ratio | width rotatable wheel 1 | width rotatable wheel 2 |
|---|---|---|
| 1 | x | x |
| 2 | x | 2.x |
| 3 | x | 3.x |
| n | x | n.x |

In connecting the pumps coaxially the output of the pumps at equal rotational speed corresponds to the desired mixing ratio of the co-reactive streams, depending on the dimensions of the rotatable wheels (see fig. 3 and table 1) The mixing ratio is set by the ratio of the width of the rotatable wheels.

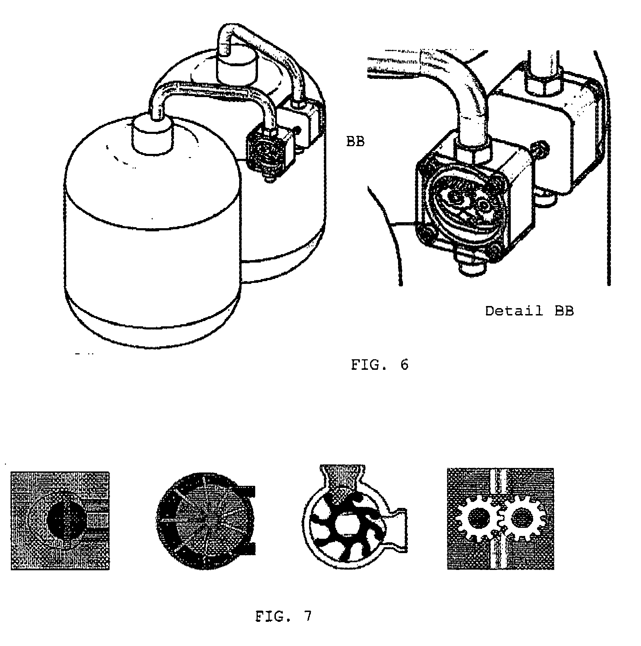

The independent pressurized sources could be :
- A plural component cartridge, having pressurized cylinders respectively filled with the liquid reactants (fig. 6)
- aerosol cans (fig. 4)
- a portable two a plural component spray kit (fig. 5)

The suction side or inlet port of the roots pump unit is connected with the independent pressurized sources and the outlet of the roots pump unit is connected with separate ducts extending to a common mixing device, such as a dispensing gun, with or without static mixer

The invention provides different advantages for the ratio-controlled plural component metering arrangement :
o mixing ratio is independent of can or cylinder pressure.
o ratio-controlling system is self-regulating due to coaxially connected pump units
o the pump units are not externally driven

## Claims

1. A ratio control arrangement for the dispensing of plural component materials, wherein the plural components are supplied independently to separate, coaxially connected, not externally driven, positive dosage pumps being laid out in such manner that their output ratio at equal rotational speed corresponds to the desired mixing ratio, independently of the feeding pressure of the plural components.

2. The arrangement of claim 1 wherein the dosage pumps are rotatable pumps coaxially connected.

3. The arrangement of claim 1 or 2 wherein the dosage pumps are Roots pumps.

4. The arrangement of any preceding claims wherein there are two components.

5. The arrangement of any preceding claims wherein the output ports are connected to a mixing unit.

6. The arrangement of any preceding claims wherein the components are a polyol composition and a polyisocyanate composition.

7. The arrangement of any preceding claims for dispensing a polyurethane foam.

8. The arrangement of any preceding claims wherein the output delivery mixing ratio is set by the ratio of the width of rotatable wheels.
